# EUROPEAN PATENT SPECIFICATION

(11) **EP 2 839 909 B1**
(45) Date of publication and mention of the grant of the patent: **26.01.2022**
(21) Application number: 13769582.1
(22) Date of filing: 21.03.2013
(51) Int. Cl.: B23B 29/26

(54) **MACHINE TOOL**
MASCHINENWERKZEUG
MACHINE-OUTIL

(30) Priority: 26.03.2012 JP 2012069984
(43) Date of publication of application: 25.02.2015
(73) Proprietor: Citizen Watch Co., Ltd., Tokyo 188-8511 (JP); Citizen Machinery Co., Ltd., Nagano 389-0206 (JP)
(72) Inventor: KERA Yasuhiro, Kitasaku-gun Nagano 389-0206 (JP); ASAHARA, Noriyuki, Kitasaku-gun Nagano 389-0206 (JP); KASUYA, Hiroshi, Kitasaku-gun Nagano 389-0206 (JP); KOTAKE, Kyota, Kitasaku-gun Nagano 389-0206 (JP)
(74) Representative: Puschmann Borchert Kaiser Klettner Patentanwälte Partnerschaft mbB
(86) International application number: PCT/JP2013/058069
(87) International publication number: WO 2013/146525

(56) References cited:
- EP-A1- 1 321 212
- CN-Y- 201 214 153
- JP-A- H07 308 803
- JP-A- 2002 018 605
- JP-A- 2002 341 914
- JP-A- 2004 058 227
- US-A- 1 821 743

## Description

The present invention relates to a machine tool according to the preamble of claim 1.

There is a known NC automatic lathe that includes feed screws along two mutually orthogonal axis directions on a plane orthogonal to an z axis, which is along a center line of a spindle, and that moves a tool post on an orthogonal X-Y coordinate system inclined against an orthogonal A-B coordinate system consisting of the axial directions of the feed screws to machine a workpiece, see JP H07-308803 A, claims, Fig. 1 to 3, for example, which is the closest state of the art and configured according to the preamble of independent claim 1. In this case, a plurality of tools is arranged along a Y axis direction of the X-Y coordinate system and move in an X axis direction of the X-Y coordinate system to cut into the workpiece and perform machining. The plurality of tools are supported on a tool post. The tools being movable as a unit along with movement of the tool post with the movement means. The tool post being movable in a cut-in direction so that machining with a particular one of the tools is executed and being movable in a straight line along a selection axis of the tools intersecting the cut-in direction so that the tools mounted on the tool post are selectively switched. The plurality of tools are arranged such that blade edges thereof are aligned with a straight line along a selection axis of the tools.

Also, JP 2001-300802 A, see claims, Fig. 1 to 6, discloses a method for adjusting a blade edge position of respective cutting tools provided on a comb-toothed tool post of a machine tool, such as an NC lathe, against a material to be machined on the basis of machining data. According to this method, when the NC lathe machines a bar, the comb-toothed tool post, on which cutting tools used for machining operation have been mounted, is moved so that a blade edge of a particular cutting tool whose blade edge position is to be adjusted comes into contact with a lateral desired point of the bar held at an actual machining position. The lateral desired point is approximately 90 degrees away from a vertex of the bar along a circumferential direction of the bar, the vertex being a point where the blade edge of respective cutting tools comes into contact with in machining operation, On the basis of a Y coordinate value of the lateral desired position and a premeasured radius of the bar, a Y coordinate value (absolute value) of a center, or rotational axis, of the bar is determined. Then, the blade edge of the particular cutting tool is moved to the Y coordinate value of the rotational axis of the bar for coming into contact with the vertex of the bar to perform cutting operation. This enables highly accurate machining.

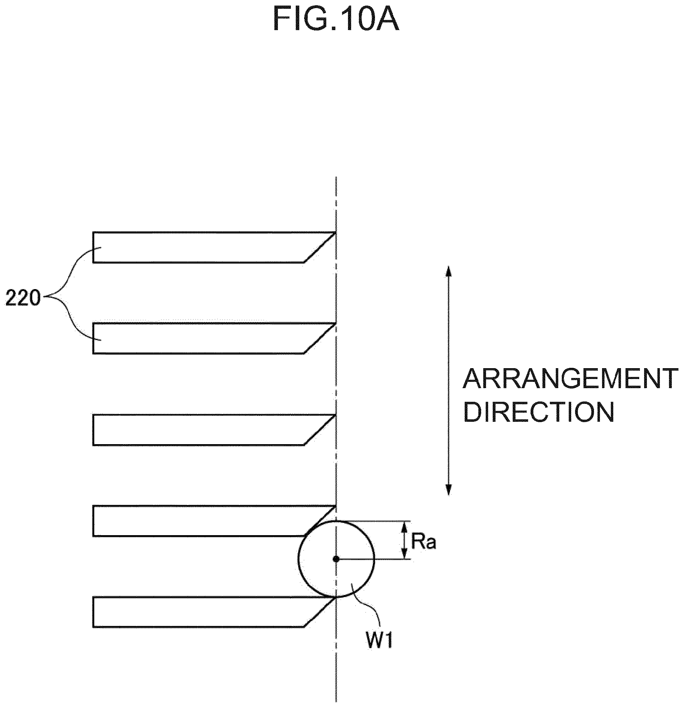

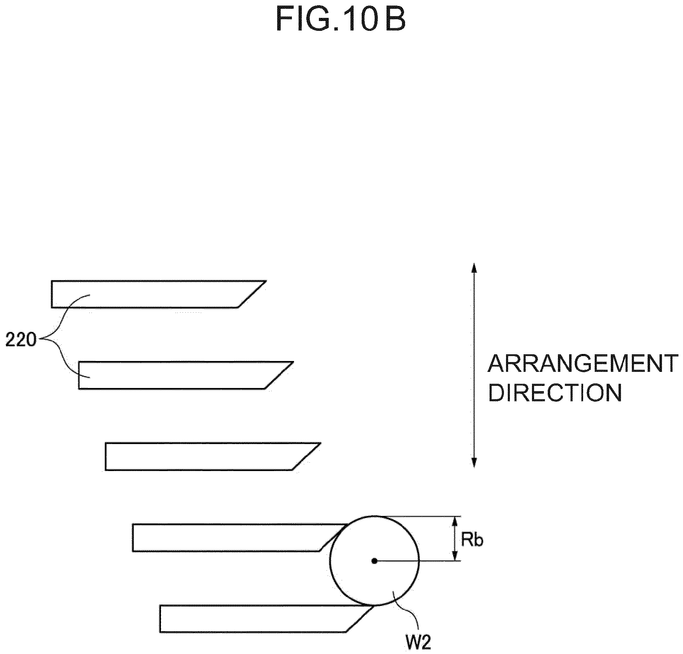

As shown in Fig. 10A, the above-described blade edge position adjustment is difficult to execute, however, against a bar having an outer diameter larger than an outer diameter Ra of a bar W1 that abuts an adjacent cutting tool, because the adjacent cutting tool interferes with the execution of the blade edge position adjustment. Thus, as shown in Fig. 10B, in a machine tool disclosed in Patent Literature 2, blade edges of respective tools 220 are staggered in a cut-in direction of the tools 220, which is orthogonal to an arrangement direction of the tools 220, in a stepwise fashion. Thus, the blade edge position adjustment can be executed against a bar W2 having an outer diameter Rb that is larger than a distance between two adjacent tools.

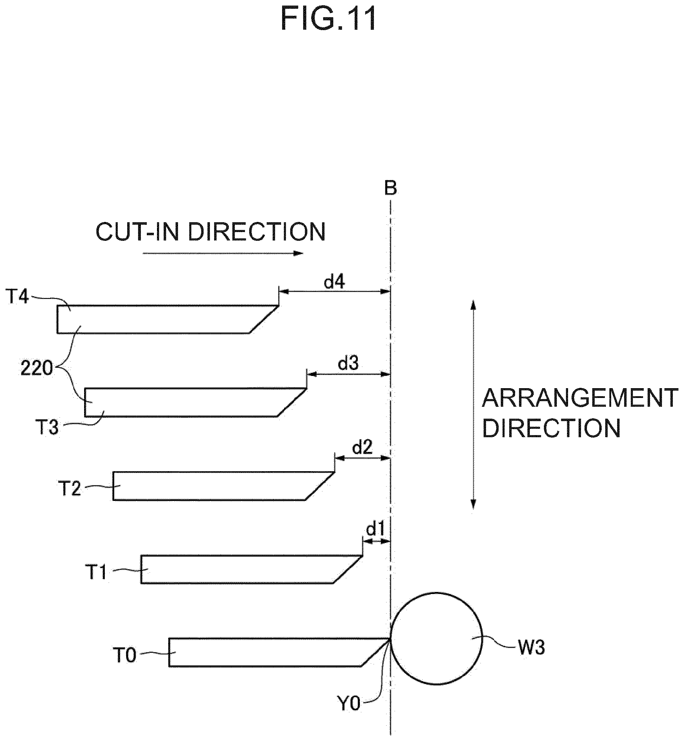

The above-described machine tool, however, has a problem that, because the blade edges of the respective tools 220 are staggered in the cut-in direction in a stepwise fashion, extra stroke lengths d1, d2, d3, and d4 corresponding to the amount of the staggering exist for the tools 220 when the blade edge position adjustment is executed for switching between the tools 220, or when the respective tools 220 cut into a workpiece W3, as shown in Fig. 11.

For example, when the blade edge of the respective tools 220 moves to a position of a Y coordinate value (Y0) of the rotational axis of the bar, tools T1, T2, T3, and T4 need to additionally move the extra stroke lengths d1, d2, d3, and d4, respectively, in the cut-in direction in comparison with a tool T0. In other words, the tools T1, T2, T3, and T4 need to move the extra stroke lengths d1, d2, d3, and d4, respectively, for machining operation, and also need to move back the same extra stroke lengths for switching between the tools T0, T1, T2, T3, and T4. This amounts to wasted time in non-cutting operation to extend machining time.

Also, when the blade edges of the respective tools 220 are staggered in the cut-in direction in a stepwise fashion, the feed screws need to be adapted for moving the tool post for the extra stroke length of d4, which is the maximum staggering amount of the tools 220, in addition to the stroke length of the tool T0 in the cut-in direction. The resulting total stroke length, however, is unnecessarily long for tools whose staggering amount is less than d4. Due to the elongation of the feed screws, the machine tool becomes larger and the machining time is extended, for example.

EP 1 321 212 A discloses a machine tool including movement means having a first feed axis and a second feed axis that mutually intersect, and a plurality of tools movable as a unit with the movement means. The respective blade edges of these two tools are staggered in a stepwise fashion in the cut-in direction.

Thus, a technical problem to be solved by the present invention, or an object of the present invention, is to provide a machine tool that is capable of executing the blade edge position adjustment of a plurality of tools attached thereto against a bar having a larger diameter and that is also capable of reducing wasted time in non-cutting operation.

According to the present invention, a machine tool includes the features of independent claim 1. Such a machine tool includes movement means, which has a first feed axis and a second feed axis that mutually intersect, a tool post movable with the movement means, and a plurality of tools supported on a tool post. Furthermore, a spindle holding a work to be machined by the plurality of tools is provided. The movement means is composed of two feed mechanisms of one feed mechanism having the feed axis and another feed mechanism having the second feed axis. The plurality of tools is movable as a unit along with movement of the tool post with the movement means. The tool post is movable in a cut-in direction so that machining with a particular one of the tools is executed. Each of the plurality of tools is arranged in parallel along a direction orthogonal to the cut-in direction. The tool post moves on in a straight line along a selection axis of the plurality of tools intersecting with the cut-in direction so that the plurality of tools supported the tool post is selectively switched. According to the invention the cut-in direction intersects with the first feed axis and the second feed axis. The plurality of tools is arranged such that blade edges thereof are aligned with the straight line along the selection axis of the tools. One of the first feed axis and the second feed axis is arranged along the straight line along the selection axis of the tools. Respective blade edges of the plurality of tools are staggered in a stepwise fashion in the cut-in direction.

According to a preferred embodiment of the present invention, the tools are inclined as a unit so that the blade edges thereof are aligned with the one of the first feed axis or the second feed axis.

According to a refinement of the preferred embodiment, the first feed axis and the second feed axis are respectively set in a horizontal direction and a vertical direction that are orthogonal to each other.

According to a further refinement of the preferred embodiment, the plurality of tools is arranged in the vertical direction.

In the machine tool according to the present invention, because the blade edges of the respective tools are aligned with a straight line along the selection axis for selecting between the tools, each tool can be directly moved to a tool standby position and wasted time in non-cutting operation can thus be reduced. By moving the tools in the selection axis, the tools can be switched therebetween regardless of the staggering amount of respective blade edges to machine a workpiece. As with the known art, because the blade edges of the respective tools are staggered in the cut-in direction in a stepwise fashion, the blade edge position adjustment can be executed against a bar having an outer diameter larger than a distance between any two adjacent tools.

In the machine tool according to the preferred embodiment the present invention, the tools can be switched therebetween easily by moving the tools along the first feed axis or the second feed axis. Each tool can machine a workpiece without moving an extra stroke length in accordance with the staggering amount of the blade edge thereof, and the first feed axis or the second feed axis can be made compact.

In the machine tool according to the refinement of the preferred embodiment, invention, because the stroke lengths in the horizontal direction and the vertical direction do not need to be made longer, the machine tool can be made compact in the horizontal direction and the vertical direction.

In the machine tool according to the further refinement of the preferred embodiment, because the stroke length in the horizontal direction does not need to be made longer, the machine tool can be made compact in the horizontal direction.

Further advantages, features and potential applications of the present invention may be gathered from the description which follows, in conjunction with the embodiments illustrated in the drawings.

Throughout the description, the claims and the drawings, those terms and associated reference signs will be used as are notable from the enclosed list of reference signs. In the drawings is shown
- Fig. 1: a perspective view of a machine tool in accordance with an embodiment of the present
- Fig. 2: an internal front view of the machine tool in accordance with the embodiment of the present invention as seen from an interior to a front spindle side;
- Fig. 3: a main part schematic front view of the machine tool in accordance with the embodiment of the present invention;
- Fig. 4: a conceptual diagram describing an inclined state of a plurality of tools with respect to a second feed shaft;
- Fig. 5: a conceptual diagram describing one step of a center level adjustment method;
- Fig. 6: a conceptual diagram describing a state in which a tool cuts into a workpiece;
- Fig. 7: a conceptual diagram describing a state in which tools are switched therebeteen;
- Fig. 8: a conceptual diagram describing another inclined state of the plurality of tools with respect to the second feed axis, which does not fall within the scope of the claims but which is useful for the understanding of the invention;
- Fig. 9: a main part schematic front view of a machine tool, which does not fall under the scope of the claims but which is useful for the understanding of the invention;
- Fig. 10A: a conceptual diagram illustrating a (first) relative positional relationship between a plurality of tools and a workpiece in a conventional machine tool;
- Fig. 10B: a conceptual diagram illustrating a (second) relative positional relationship between a plurality of tools and a workpiece in a conventional machine tool, and
- Fig. 11: a conceptual diagram illustrating a (third) relative positional relationship between a plurality of tools and a workpiece in a conventional machine tool.

A machine tool 100 in accordance with one embodiment of the present invention will now be described.

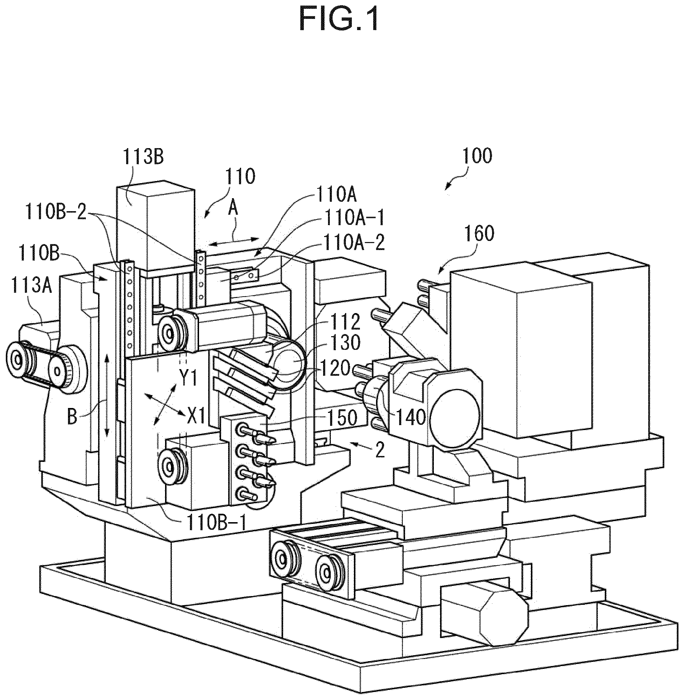

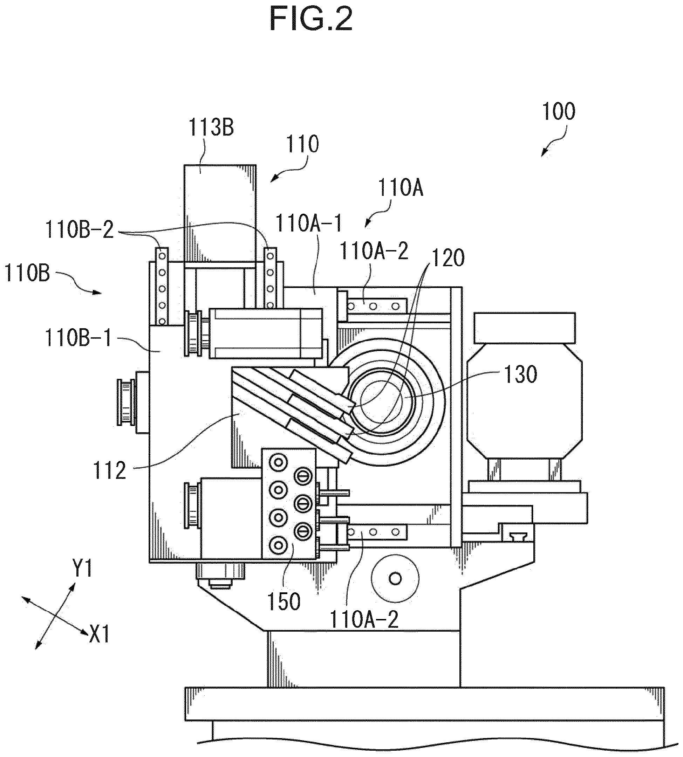

As shown in Fig. 1 and 2, the machine tool 100 is an NC automatic lathe and includes a plurality of tools 120 such as cutting tools supported on a tool post 112, a front spindle 130, a back spindle 140, a back tool post 150, and a turret 160. The machine tool 100 is capable of machining a workpiece by giving and receiving the workpiece between the front spindle 130 and the back spindle 140.

The tool post 112 is movably supported via a feed mechanism 110A on a first feed axis A and a feed mechanism 110B on a second feed axis B, the first feed axis A and the second feed axis B being mutually orthogonal. The feed mechanisms 110A and 110B constitute movement means 110 of the tool post 112. The first feed axis A and the second feed axis B are orthogonal to an axis direction Z1 of the front spindle 130 shown in Fig. 1.

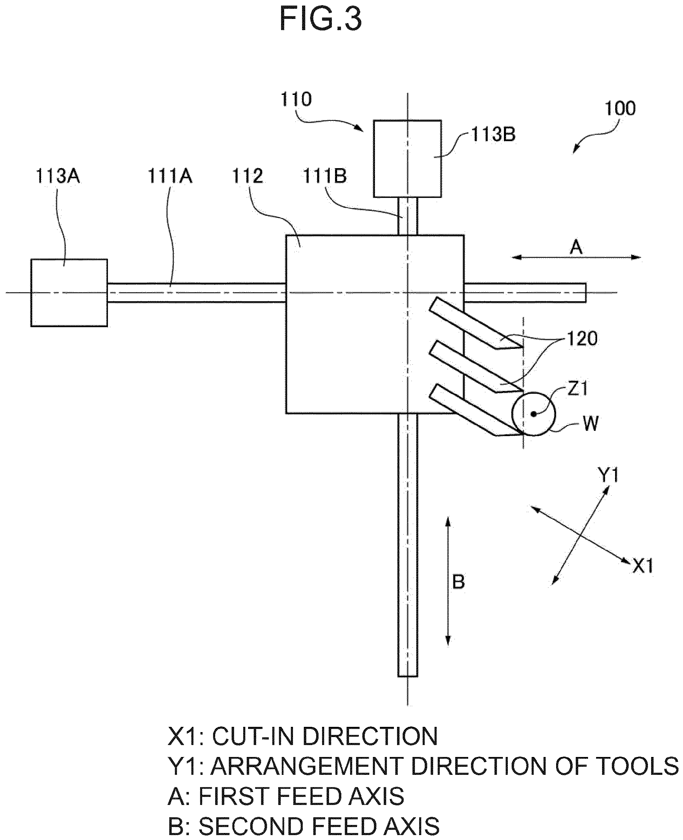

As shown in Fig. 1 to 3, the feed mechanism 110A on the first feed axis A includes a first slide stand 110A-1 that is slidably supported on a slide rail 110A-2 along the first feed axis A and that is screwed with a first feed screw 111A along the first feed axis A. The first feed screw 111A is rotationally driven by a first motor 113A. Due to the driving force of the first motor 113A, the first slide stand 110A-1 moves along the first feed axis A. The feed mechanism 110B on the second feed axis B includes a second slide stand 110B-1 that is slidably supported on a slide rail 110B-2 along the second feed axis B and that is screwed with a second feed screw 111B along the second feed axis B. The second feed screw 111B is rotationally driven by a second motor 113B. Due to the driving force of the second motor 113B, the second slide stand 110B-1 moves along the second feed axis B. The tool post 112 is mounted on the second slide stand 110B-1 and moves along the first feed axis A via the rotation of the first feed screw 111A and along the second feed axis B via the rotation of the second feed screw 111B.

The tools 120 are mounted on the tool post 112 as a unit. The movement means 110 can move the tool post 112 in any direction with the combined action of the first feed screw 111A and the second feed screw 111B. The machine tool 100 can machine a round bar-shaped workpiece W held by the front spindle 130 shown in Fig. 1 and 2 while switching between the tools 120 by moving the tools 120 in any direction via the movement means 110.

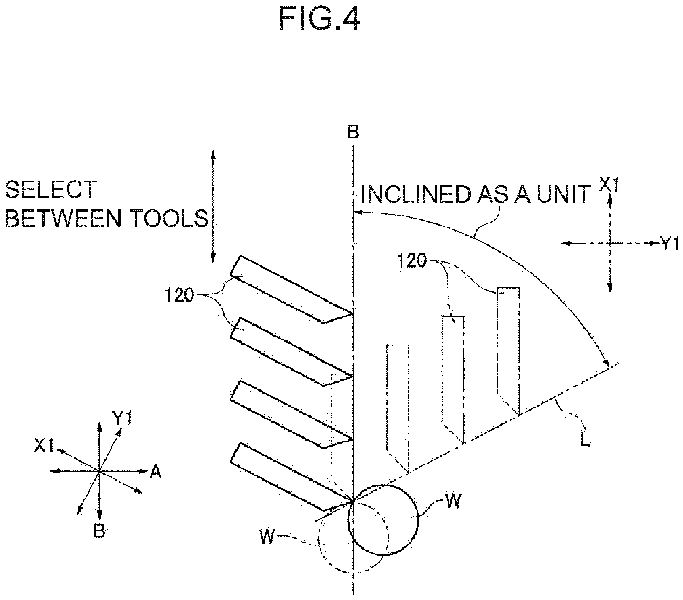

The tools 120 are arranged in parallel to each other along a Y1 axis direction that is inclined with respect to the first feed axis A and the second feed axis B. As shown in Fig. 4 with imaginary lines illustrating the Y1 axis direction as a horizontal direction, the tools 120 are arranged so that the blade edges thereof are staggered in a stepwise fashion in an X1 axis direction perpendicular to the Y1 axis direction. The blade edges of the respective tools 120 are proportionally staggered and are positioned on a straight line L. As shown in Fig. 4 with solid lines, the tools 120 are inclined as a unit so that the straight line L is aligned with the first feed axis B.

Thus, an X1-Y1 coordinate system consisting of the X1 axis direction and the Y1 axis direction is rotated for a predetermined angle with respect to an A-B coordinate system consisting of the first feed axis A and the second feed axis B. With this configuration, each of the blade edges comes into contact with the workpiece W at a top of the workpiece W in the X1 axis direction in machining operation, and the X1 axis direction becomes a cut-in direction of the tools 120.

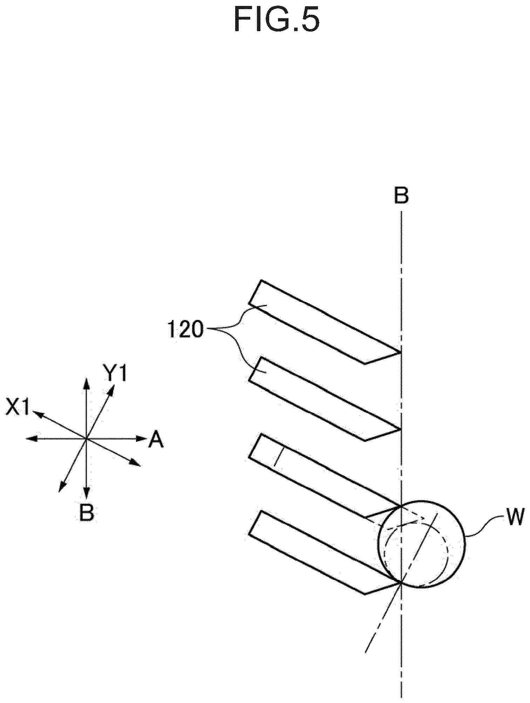

Because each of the blade edges comes into contact with the workpiece W at a top of the workpiece W in the X1 axis direction in machining operation, the blade edge position adjustment is executed, as shown in Fig. 5, by firstly contacting a blade edge of a particular tool 120 with a top of the workpiece W in the Y1 axis direction and then, as with the conventional art, determining a Y1 coordinate value (absolute value) of a center, or rotational axis, of the workpiece W by using a Y1 coordinate value of the contacting position and a premeasured radius of the workpiece W. Even though the blade edges of the respective tools 120 are positioned along and aligned with the second feed axis B, the blade edges are staggered in the X1 axis direction in a stepwise fashion. Thus, the blade edge position adjustment can be executed against the workpiece W having an outer diameter larger than a distance between two adjacent tools 120.

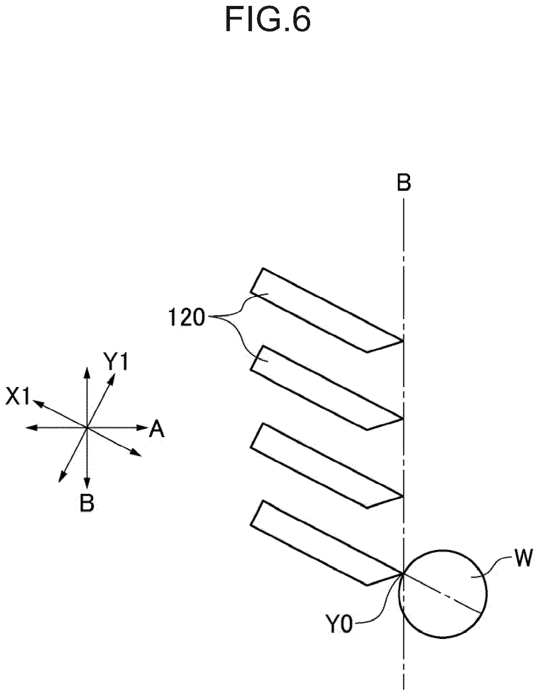

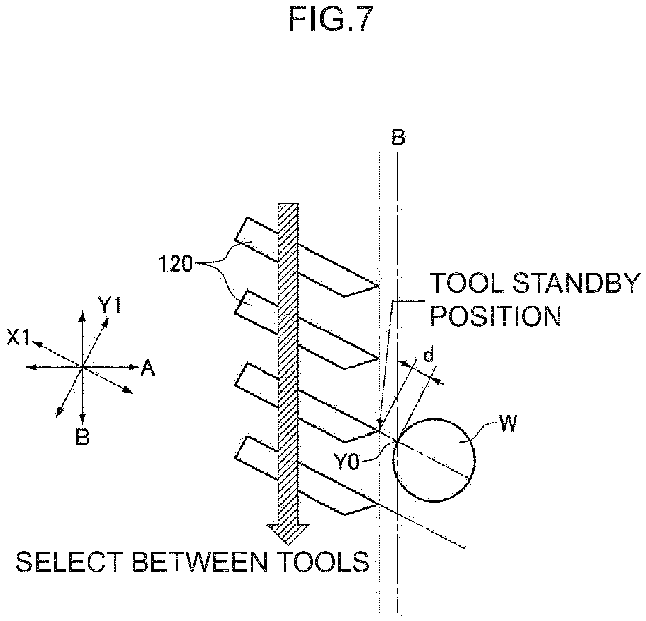

As shown in Fig. 6, the blade edge of the particular tool 120 is then moved to the Y1 coordinate value (Y0) of the rotational axis of the workpiece W and is subsequently moved in the X1 axis direction to cut into and machine the workpiece W. Because the blade edges of the respective tools 120 are aligned with the second feed axis B, the tools 120 can be switched therebetween by moving the tool post 112 along the second feed axis B regardless of the staggering of the blade edges in the X1 axis direction, as shown in Fig. 7.

For example, as shown in Fig. 7, in order to switch between the tools 120, a particular tool 120 that has been used in machining operation is moved from the surface of the workpiece W to an escape position, or a tool standby position, which is small distance d away from the surface of the workpiece W in the X1 axis direction, or the cut-in direction of the tool 120. Because the blade edges of the respective tools 120 are aligned with a straight line that is along the second feed axis B and that is passing through the tool standby position, next machining operation can be started by simply moving the tool post 112 along the second feed axis B to position another tool 120 that will be used in next machining operation to the standby position, regardless of the staggering of the blade edge, and then moving the another tool 120 for the distance d, which is a minimum moving distance common to all the tools 120, without considering the staggering amount of the blade edge. Also, because the stroke length needed for starting machining operation is common to all the tools 120, a processing stroke does not need to be made longer in accordance with the staggering amount of the blade edges in the X1 axis direction.

Thus, because the blade edges of the plurality of tools 120 are aligned with a straight line along the selection axis for selecting between the tools 120, such as the second feed axis B, the respective tools 120 can be directly moved to the tool standby position to reduce wasted time in non-cutting operation. In addition, by selecting the second feed axis B as the selection axis and inclining the tools 120 as a unit so that the blade edges of the respective tools 120 are aligned with the second feed axis B, the strokes of the first feed screw 111A and the second feed screw 111B can be determined in accordance with the rotation (inclination) angle of the X1-Y1 coordinate system with respect to the A-B coordinate system without depending on the staggering amount of the blade edges of the respective tools 120. Thus, the strokes of the first feed screw 111A and the second feed screw 111B do not need to be made longer for the length corresponding to the staggering amount of the blade edges, and the first feed screw 111A and the second feed screw 111B can be made compact. Particularly, because the tools 120 are arranged in the vertical direction, the stroke length in the horizontal direction does not need to be made longer and the machine tool 100 can thus be made compact in the horizontal direction. Furthermore, in the present embodiment, because the stroke lengths of the first feed screw 111A and the second feed screw 111B do not need to be made longer, the machine tool 100 can be made compact in the horizontal and vertical directions.

Although in the above embodiment the second feed axis B is selected as the selection axis and the blade edges of the respective tools 120 are aligned with the second feed axis B, it is also possible to select the first feed axis A as the selection axis and to align the blade edges with the first feed axis A. In this case, the tools 120 are switched therebetween by moving the tool post 112 along the first feed axis A.

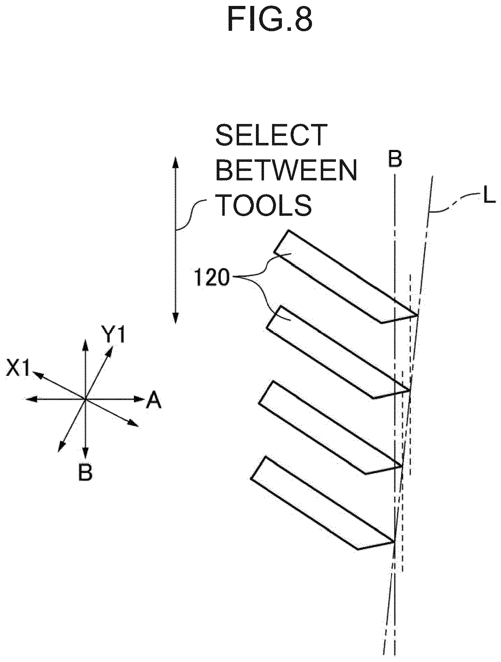

Figure 8 shows a situation, which does not fall within the scope of the claims and in which a blade edge of an upper tool 120 of any two adjacent tools of the plurality of tools 120 projects with respect to a blade edge of a lower tool 120 of the two adjacent tools for only a certain length with which cutting chips generated in machining operation with the upper tool 120 do not fall on the lower tool 120. With this arrangement of the tools 120, cutting chips generated in machining operation with the upper tool 120 do not fall on the lower tool 120. Thus, adhesion of the cutting chips to the tools 120 can be prevented. The straight line L may be used as the selection axis.

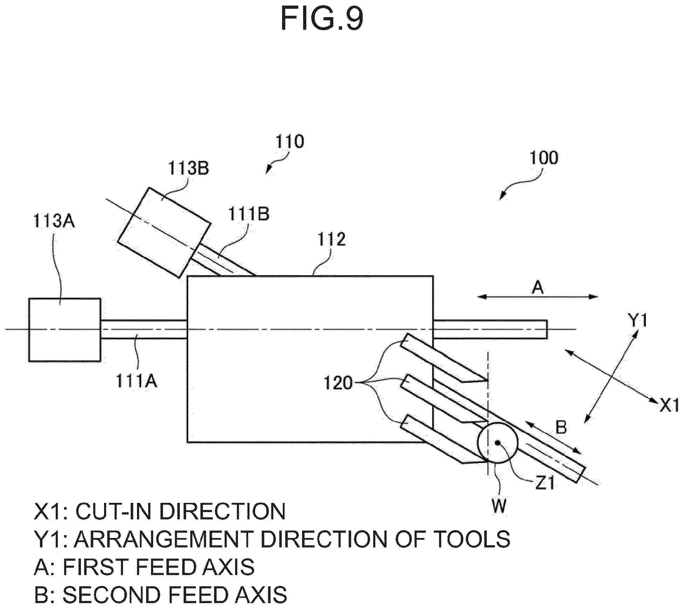

In the above embodiment the first feed axis A and the second feed axis B are orthogonal to each other and the tools 120 (the tool post 112) is moved in the X1 axis direction with the combined action of the first feed screw 111A and the second feed screw 111B. Figure 9 shows details of a machine tool that does not fall under the scope of the claims but in which the second feed screw 111B is provided along the X1 direction so that the second feed axis is set in the X1 axis direction.

In this case, the tool post 112 can be moved along the first feed axis A by driving only the first feed screw 111A and can be moved along the X1 axis direction by driving only the second feed screw 111B. This enables easy and low-load movement of the tool post 112.

### List of reference signs

- 100: Machine tool
- 110: Movement means
- 110A: Feed mechanism in a direction of A
- 110A-1: First slide stand
- 110A-2: Slide rail
- 110B: Feed mechanism in a direction of B
- 110B-1: Second slide stand
- 110B-2: Slide rail
- 111A: First feed screw
- 111B: Second feed screw
- 112: Tool post
- 120,220: Tool
- 130: Front spindle
- 140: Back spindle
- 150: Back tool post
- 160: Turret
- d1, d2, d3, d4: Extra stroke length
- A: First feed axis
- B: Second feed axis
- X: Cut-in direction of the tools
- Y: Arrangement direction of the tools
- W, W1, W2, W3: Workpiece

## Claims

1. A machine tool (100) including:
movement means (110) having a first feed axis (A) and a second feed axis (B) that mutually intersect;
a tool post (112) movable with the movement means (110),
a plurality of tools (120) supported on a tool post (112),
a spindle holding a work (W) to be machined by the plurality of tools (120); wherein
the movement means (110) is composed of two feed mechanisms of one feed mechanism having the first feed axis (A) and another feed mechanism having the second feed axis (B);
the plurality of tools (120) is movable as a unit along with movement of the tool post (112) with the movement means (110),
the tool post (112) is movable in a cut-in direction (X1) so that machining with a particular one of the tools (120) is executed,
each of the plurality of tools (120) is arranged in parallel along a direction (Y1) orthogonal to the cut-in direction (X1),
the tool post is movable on a straight line along a selection axis of the plurality of tools (120) intersecting with the cut-in direction (X1) so that the plurality of tools (120) supported by the tool post (112) is selectively switched, and
the cut-in direction (X1) intersects with the first feed axis (A) and the second feed axis (B),
**characterized in that** the plurality of tools (120) is arranged such that blade edges thereof are aligned with the straight line (L) along the selection axis of the tools (120),
one of the first feed axis (A) and the second feed axis (B) is arranged along the straight line (L) along the selection axis of the tools (120), and
respective blade edges of the plurality of tools (120) are staggered in a stepwise fashion in the cut-in direction (X1).

2. The machine tool according to claim 1, **characterized in that** the tools (120) are inclined as a unit so that the blade edges thereof are aligned with the one of the first feed axis (A) or the second feed axis (B).

3. The machine tool according to claim 2, **characterized in that** the first feed axis (A) and the second feed axis (B) are respectively set in a horizontal direction and a vertical direction that are orthogonal to each other.

4. The machine tool according to claim 3, **characterized in that** the plurality of tools (120) is arranged in the vertical direction.

## Patentansprüche

1. Werkzeugmaschine (100), umfassend:
ein Bewegungsmittel (110) mit einer ersten Vorschubachse (A) und einer zweiten Vorschubachse (B), die sich schneiden;
einen Werkzeughalter (112), der mit dem Bewegungsmittel (110) bewegbar ist;
eine Vielzahl von Werkzeugen (120), die an einem Werkzeughalter (112) gehalten werden;
eine Spindel, die ein von der Vielzahl von Werkzeugen (120) zu bearbeitendes Werkstück (W) trägt;
wobei
das Bewegungsmittel (110) aus zwei Vorschubmechanismen besteht, wobei der eine Vorschubmechanismus die erste Vorschubachse (A) und der andere Vorschubmechanismus die zweite Vorschubachse (B) hat,
die Vielzahl von Werkzeugen (120) als eine Einheit zusammen mit der Bewegung des Werkzeughalters (112) mit dem Bewegungsmittel (110) bewegbar ist,
der Werkzeughalter (112) in einer Einschneiderichtung (X1) bewegbar ist, sodass eine Bearbeitung mit einem bestimmten der Werkzeuge (120) erfolgt,
jedes der Vielzahl von Werkzeugen (120) parallel entlang einer Richtung (Y1) orthogonal zu der Einschneiderichtung (X1) angeordnet ist,
der Werkzeughalter in einer geraden Linie entlang einer Auswahlachse der Vielzahl von Werkzeugen (120), die sich mit der Einschneiderichtung (X1) schneidet, bewegbar ist, sodass ein selektiver Wechsel der vom Werkzeughalter (112) getragenen Vielzahl von Werkzeugen (120) erfolgt, und
die Einschneiderichtung (X1) sich mit der ersten Vorschubachse (A) und der zweiten Vorschubachse (8) schneidet,
**dadurch gekennzeichnet, dass** die Vielzahl von Werkzeugen (120) derart angeordnet ist, dass deren Schneidkanten mit der Geraden (L) entlang der Auswahlachse der Werkzeuge (120) ausgerichtet sind,
eine Vorschubachse der ersten Vorschubachse (A) und der zweiten Vorschubachse (B) entlang der Geraden (L) entlang der Auswahlachse der Werkzeuge (120) angeordnet ist, und die jeweiligen Schneidkanten der Vielzahl von Werkzeugen (120) in Einschneiderichtung (X1) schrittweise versetzt sind.

2. Werkzeugmaschine nach Anspruch 1, **dadurch gekennzeichnet, dass** die Werkzeuge (120) als Einheit derart geneigt sind, dass ihre Schneidkanten mit der einen Vorschubachse der ersten Vorschubachse (A) oder der zweiten Vorschubachse (B) ausgerichtet sind.

3. Werkzeugmaschine nach Anspruch 2, **dadurch gekennzeichnet, dass** die erste Vorschubachse (A) und die zweite Vorschubachse (B) jeweils in eine horizontale Richtung bzw. in eine vertikale Richtung, die orthogonal zueinander sind, eingestellt sind.

4. Werkzeugmaschine nach Anspruch 3, **dadurch gekennzeichnet, dass** die Vielzahl von Werkzeugen (120) in vertikaler Richtung angeordnet ist.

## Revendications

1. Machine-outil (100) comprenant :
des moyens de déplacement (110) ayant un premier axe d'alimentation (A) et un second axe d'alimentation (B) qui se couplent mutuellement ;
un support de porte-outil (112) mobile avec le moyen de déplacement (110),
une pluralité d'outils (120) supportés sur un support de porte-outil (112), une broche maintenant une pièce (W) à usiner par la pluralité d'outils (120) ; dans laquelle :
le moyen de déplacement (110) est composé de deux mécanismes d'alimentation d'un mécanisme d'alimentation ayant le premier axe d'alimentation (A) et d'un autre mécanisme d'alimentation ayant le second axe d'alimentation (B) ;
la pluralité d'outils (120) est mobile sous la forme d'une unité conjointement avec le déplacement du support de porte-outil (112) avec le moyen de déplacement (110),
le support de porte-outil (112) est mobile dans une direction de découpe (X1) de sorte que l'usinage avec un outil particulier des outils (120) est exécuté, chacun de la pluralité d'outils (120) est agencé en parallèle le long d'une direction (Y1) orthogonale à la direction de découpe (X1),
le support de porte-outil est mobile sur une ligne droite le long d'un axe de sélection de la pluralité d'outils (120) se coupant avec la direction de découpe (X1) de sorte que la pluralité d'outils (120) supportée par le support de porte-outil (112) est sélectivement commutée, et
la direction de découpe (X1) coupe le premier axe d'alimentation (A) et le second axe d'alimentation (B),
**caractérisée en ce que** la pluralité d'outils (120) est agencée de sorte que leurs arêtes de lame sont alignées avec la ligne droite (L) le long de l'axe de sélection des outils (120), l'un parmi le premier axe d'alimentation (A) et le second axe d'alimentation (B) est agencé le long de la ligne droite (L) le long de l'axe de sélection des outils (120), et les arêtes de lame respectives de la pluralité d'outils (120) sont disposées en quinconce par palier dans la direction de découpe (X1).

2. Machine-outil selon la revendication 1, **caractérisée en ce que** les outils (120) sont inclinés sous la forme d'une unité de sorte que leurs arêtes de lame sont alignées avec l'un parmi le premier axe d'alimentation (A) ou le second axe d'alimentation (B).

3. Machine-outil selon la revendication 2, **caractérisée en ce que** le premier axe d'alimentation (A) et le second axe d'alimentation (B) sont respectivement placés dans une direction horizontale et une direction verticale qui sont orthogonales entre elles.

4. Machine-outil selon la revendication 3, **caractérisée en ce que** la pluralité d'outils (120) est agencée dans la direction verticale.
